# EUROPÄISCHE PATENTSCHRIFT

(11) **EP 1 979 440 B1**
(45) Veröffentlichungstag und Bekanntmachung des Hinweises auf die Patenterteilung: **15.08.2012**
(21) Anmeldenummer: 06806171.2
(22) Anmeldetag: 11.10.2006
(51) Int. Cl.: C10B 15/02, C10B 21/10

(54) **KOKSOFEN MIT OPTIMIERTER STEUERUNG UND VERFAHREN ZUR STEUERUNG**
COKE OVEN WITH OPTIMIZED CONTROL AND METHOD OF CONTROL
FOUR A COKE A COMMANDE OPTIMISEE ET SON PROCEDE DE FONCTIONNEMENT

(30) Priorität: 31.01.2006 DE 102006004669
(43) Veröffentlichungstag der Anmeldung: 15.10.2008
(73) Patentinhaber: ThyssenKrupp Uhde GmbH, 44141 Dortmund (DE)
(72) Erfinder: SCHÜCKER, Franz-Josef, 44577 Castrop-Rauxel (DE); KIM, Ronald, 45144 Essen (DE)
(86) Internationale Anmeldenummer: PCT/EP2006/009800
(87) Internationale Veröffentlichungsnummer: WO 2007/087839

(56) Entgegenhaltungen:
- US-A- 4 287 024
- KOCHANSKI U ET AL: "OVERVIEW OF UHDE HEAT RECOVERY COKEMAKING TECHNOLOGY" AISTECH. IRON AND STEEL TECHNOLOGY CONFERENCE PROCEEDINGS, ASSOCIATION FOR IRON AND STEEL TECHNOLOGY, US, Bd. I, Mai 2005 (2005-05), Seiten 25-32, XP008068124

## Beschreibung

Die Erfindung betrifft einen Koksofen in Flachbauweise, einen so genannten Non-Recovery- oder Heat-Recovery-Koksofen, der mindestens eine Messvorrichtung zur Konzentrationsmessung von Gasbestandteilen der Koksofenkammer, der Koksofensohle und/oder des Abgaskanals aufweist und bei welchem auf Basis dieser Daten über einen Prozessrechner die optimale Zuführung von Primär- und/oder Sekundärluft ermittelt und geregelt wird. Ebenso ist von der Erfindung ein Verkokungsverfahren unter Einsatz eines solchen Verkokungsofens umfasst.

Die Beheizung von Heat-Recovery-Öfen erfolgt üblicherweise durch Verbrennung des bei der Verkokung entstehenden Gases beziehungsweise der leichtflüchtigen Anteile der zu verkokenden Kohle. Die Verbrennung wird dabei so gesteuert, dass ein Teil des Gases oberhalb der Kohlecharge mit Primärluft in der Ofenkammer verbrennt. Dieses teilverbrannte Gas wird über Gaskanäle, welche auch als "Downcomer" bezeichnet werden, der Sohle der Ofenkammer zugeführt und hier durch Zugabe weiterer Verbrennungsluft, der Sekundärluft, vollständig verbrannt.

Auf diese Weise wird der Kohlecharge Wärme direkt von oben und indirekt von unten zugeführt, was sich vorteilhaft auf die Verkokungsgeschwindigkeit und damit auf die Leistung der Öfen auswirkt. Zur Durchführung des Verfahrens ist es erforderlich, dass zugeführte Primärluft und Sekundärluft, exakt bemessen und über die Dauer der Garungszeit, welche bis zu 96 Stunden dauern kann, veränderlich gesteuert wird. Es sind im Stand der Technik Heat-Recovery- und Non-Recovery-Koksöfen in Flachbauweise weitreichend beschrieben. Beispielhaft seien hier US 4,344,820, US 4,287,024, US 5,114,542, GB 1 555 400 oder CA 2 052 177 C genannt.

Nach herkömmlichem Stand der Technik wird aus der Atmosphäre die Primärluft durch Öffnungen in den Türen eingesaugt. Die Sekundärluft wird durch bodennahe Öffnungen eingesaugt und über Kanäle in die Heizzüge geleitet, welche im Wesentlichen horizontal unter der Koksofenkammer verlaufen. Die Öffnungen für Primär- und Sekundärluft sind entweder permanent geöffnet oder mit Klappen zur Einstellung der anzusaugenden Luftmenge versehen.

Da die Ofenbatterien sehr weitläufig sind, in der Regel eine sehr hohe Temperatur vorherrscht und eine starke Schmutzentwicklung gegeben ist, sind im Stand der Technik nur manuell verstellbare Lüftungsklappen offenbart. In US 5,928,476 ist eine derartige Koksofenbatterie dargestellt, wobei in jeder Koksofentür drei manuell zu bedienende Öffnungen vorgesehen sind, in oder vor denen je eine an den Öffnungsquerschnitt angepasste und an einer Mittelachse gelagerte Platte oder Scheibe angeordnet ist. Diese Öffnungsklappen sind über Hebel in ihrer Position manuell veränderlich.

In der DE102005055483.0-24 der Anmelderin, wird ein zentrales Stellelement offenbart, dass eine kontinuierliche Regelung der Primär- und der Sekundärluft ermögleicht.

In der Praxis zeigte sich jedoch, dass bei den bekannten Koksöfen, wechselnden Kohlequalitäten, aufgrund unterschiedlicher Zerkteinerungsgrade, Feuchte oder Inertanteilen etc. schwierig zu beherrschen waren und unnötig lange Garungszeiten zum Erreichen hoher Koksqualitäten vorgesehen werden mussten.

Die Aufgabe der Erfindung ist es daher, die beschriebenen Mängel auf wirtschaftliche Weise zu beheben und eine optimierte Zuführung von Primär- und/oder Sekundärluft sicher zu stellen, um die Ofenleistung zu verbessern und damit die Garungszeiten zu verkürzen.

Die Erfindung löst diese Aufgabe durch einen Verkokungsofen in Flachbauweise, einen so genannten Non-Recovery- oder Heat-Recovery-Koksofen, der eine Koksofenkammer und eine aus Kanälen bestehende Koksofensohle umfasst, wobei die Koksofenkammer und die Koksofensohle über Gaskanäle verbunden sind, und in der Ofenwand oder Ofentür Öffnungen für die Zuführung von Primärluft und eine oder mehrere Öffnungen oder Kanäle für die Zuführung von Sekundärluft in die Koksofensohle vorgesehen sind, und vor den Öffnungen oder in den Leitungen zu den ÖffnungenAbsperrvorrichtungen angeordnet sind.

Dabei ist mit dem Verkokungsofen
■ mindestens eine Messvorrichtung zur Konzentrationsmessung von Gasbestandteilen der Koksofenkammer, der Koksofensohle und/oder der Gaskanäle angeordnet verbunden, und
■ diese Messvorrichtung ist ihrerseits mit einer Rechnereinheit derart verbunden, dass diese Rechnereinheit Daten und Messergebnisse der Messvorrichtung empfangen kann, und
■ die Rechnereinheit über Steuerleitungen mit einer oder mehreren Stellvorrichtungen der Absperrvorrichtungen verbunden ist, wobei die Absperrvorrichtungen Ventile, Klappen, Schieber oder dergleichen darstellen.

Eine verbesserte Variante besteht darin, dass weiterhin in der Koksofensohle oder in dem Abgaskanal des Verkokungsofens eine Temperaturmessvorrichtung angeordnet ist, die ebenfalls mit der Rechnereinheit derart verbunden ist, dass diese Daten und Messergebnisse der Temperaturmessvorrichtung empfangen kann.

Die Messvorrichtungen sind idealerweise Analysegeräte zur Messung von Wasserstoff, Stickstoff, Kohlenmonoxid oder Kohlendioxid, die über eine Leitung mit der Koksofenkammer verbunden sind. Die Konzentration dieser Hauptkomponenten oder einer dieser Hauptkomponenten korrelieren mit dem Garungszustand des Kokskuchens sehr gut.

Vor allem Wasserstoff, welches als letzter Kohlebestandteil verbrennt, ist ein idealer Indikator um das Ende der Garungszeit anzuzeigen. Mit dem erfindungsgemäßen Verkokungsofen ist es somit möglich, das Verkokungsverfahren so zu steuern, dass das Ende der Garungszeit quasi zeitgleich mit dem Erreichen der 0 Vol.-% an H₂ erreicht wird. Ist nämlich das H₂ frühzeitig verbrannt, führt dies zu einer erhöhten Verbrennung und/oder Veraschung der Wertstoffanteile des Kokses, was wirtschaftlich nachteilig ist.

In einer weiteren Variante der Erfindung, ist die Messvorrichtung eine Lambdasonde, die zur Bestimmung von Sauerstoff in der Koksofensohle oder in dem Abgaskanal angeordnet ist. Mittels der Lambdasonde und der Rückkopplung mit der Regelung der Sekundärluft kann sichergestellt werden, dass in der Koksofensohle immer eine vollständige Verbrennung erfolgt, ohne dass die Temperatur zu sehr absinkt, was zu einer Verlängerung der Garungszeit führen würde.

Bei einer weiter fortentwickelten Variante der Erfindung, sind mindestens ein Analysegerät zur Bestimmung von Wasserstoff, Stickstoff, Kohlenmonoxid oder Kohlendioxid und eine Lambdasonde zur Bestimmung von Sauerstoff vorgesehen.

Weiterhin ist von der Erfindung ein Verfahren zur Verkokung von Kohle umfasst, bei welchem der vorgenannte Verkokungsofen in einer der offenbarten Ausführungsformen zum Einsatz kommt, wobei
■ der Ofen mit Kohle gefüllt und der Verkokungsvorgang gestartet wird,
■ während der Verkokung die Konzentration einer oder mehrere Gasbestandteile analysiert werden,
■ diese Daten an eine Rechnereinheit übermittelt werden,
■ diese Rechnereinheit auf Basis gespeicherter diskreter Werte oder Modellrechnungen die Zufuhr der Primär- und/oder der Sekundärluft ermittelt, und
■ über Steuerleitungen die Steuerelemente der Absperrvorrichtungen für Primär- und/oder Sekundärluft ansteuert und somit
■ die Primär- und/oder Sekundärluft regelt.

In einer verbesserten Variante des Verfahrens werden während der Verkokung
■ die Temperatur in der Koksofensohle und/oder dem Abgaskanal ermittelt, und
■ diese Daten an eine Rechnereinheit übermittelt,
■ wobei anschließend diese Rechnereinheit auf Basis gespeicherter diskreter Werte oder Modellrechnungen die Zufuhr der Primär- und/oder der Sekundärluft ermittelt, und
■ über Steuerleitungen die Steuerelemente der Absperrvorrichtungen für Primär- und/oder Sekundärluft steuert und somit
■ die Primär- und/oder Sekundärluft regelt.

Das erfindungsgemäße Verfahren wird dabei derart geführt, dass die mittlere Temperatur in der Koksofensohle im Laufe der Verkokung um 350°C bis 400°C fällt und 1000°C nicht unterschreitet. Weiterhin besteht eine Optimierung darin, die Sauerstoffkonzentration im Abgaskanal konstant im Bereich von 7,5 bis 8,5 Volumenprozent zu regeln.

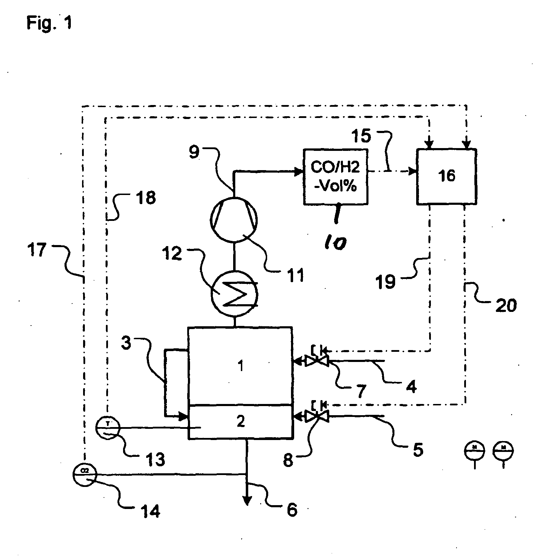

Die Erfindung ist anhand der Ausführungsvariante in Fig.1 beispielhaft beschrieben, wobei die Erfindung nicht auf dieses Ausführungsbeispiel beschränkt ist. Fig. 1 zeigt einen Koksofen, der eine Koksofenkammer 1 und eine Koksofensohle 2 aufweist, wobei die einzelnen Kammern oder Kanäle der Koksofensohle 2 nicht dargestellt sind. Über den Gaskanal 3 ist die Koksofenkammer 1 mit der Koksofensohle 2 verbunden. In die Koksofenkammer 1 kann über die Leitung 4 Primärluft zugeführt werden, wobei in der Leitung 4 die Regelklappe 7 angeordnet ist. In die Koksofensohle 2 kann über die Leitung 5 Sekundärluft zugeführt werden, wobei in der Leitung 5 die Regelklappe 8 angeordnet ist: Die Leitung 9 dient zur Entnahme eines geringen Gasvolumenstroms aus der Koksofenkammer 1 und verbindet die Koksofenkammer 1 mit einem Analysegerät 10, welches in dem dargestellten Beispiel zur Messung von H₂ geeignet ist. Das zu messende und in der Leitung 9 geförderte Gas wird mittels des Verdichters 11 angesaugt und zum Analysegerät 10 gefördert. Vor dem Verdichter 11 ist zur Kühlung des Gases ein Wärmetauschers 12 angeordnet. Über die Leitung wird der Gasvolumenstrom wieder in die Koksofenkammer 1 geleitet.

Weiterhin ist das in der Koksofensohle 2 angeordnete Temperaturmessgerät 13 und die in der Abgasleitung 6 angeordnete Lambdasonde 14 schematisch dargestellt. Über die Datenleitungen 17 und 18 werden die Messwerte der Rechnereinheit 16 zugeleitet, die auch die Messwerte des Analysegerätes 10 über die Datenleitung 15 erhält. Die Rechnereinheit 16 steuert über die Steuerleitungen 19 die Regelklappe 7 und regelt somit den Volumenstrom der Primärluft beziehungsweise die Temperatur in der Koksofenkammer 1. Weiterhin steuert die Rechnereinheit 16 über die Steuerleitung 20 die Regelklappe 8, wodurch der Volumenstrom der Sekundärluft und dadurch die Temperatur in der Koksofensohle 2 und Sauerstoffgehalt in der Abgasleitung 6 geregelt wird.

Durch das beschriebene Verfahren und die erfindungsgemäße Vorrichtung konnte die Garungszeit deutlich gesenkt werden. Es ist nunmehr möglich, zuverlässig eine Garungszeit von unter 48 Stunden zu erreichen, was eine erheblich Steigerung der Ofenleistung gegenüber dem Stand der Technik darstellt.

### Bezugszeichenliste

- 1: Koksofenkammer
- 2: Koksofensohle
- 3: Gaskanal
- 4: Leitung (Primärluft)
- 5: Leitung (Sekundärluft)
- 6: Abgasleitung
- 7: Absperrelement (Primärluft)
- 8: Absperrelement (Sekundärluft)
- 9: Leitung
- 10: Analysegerät
- 11: Kompressor
- 12: Wärmetauscher
- 13: Temperaturmessgerät
- 14: Lambdasonde
- 15: Datenleitung
- 16: Rechnereinheit
- 17: Datenleitung
- 18: Datenleitung
- 19: Datenleitung
- 20: Datenleitung

## Patentansprüche

1. Verkokungsofen in Flachbauweise, ein so genannter Non/Heat Recovery Verkokungsofen, umfassend eine Koksofenkammer und eine aus Kanälen bestehende Koksofensohle, wobei die Koksofenkammer (1) und die Koksofensohle (2) über Gaskanäle (3) verbunden sind, und in der Ofenwand oder Ofentür Öffnungen für die Zuführung von Primärluft und eine oder mehrere Öffnungen oder Kanäle für die Zuführung von Sekundärluft in die Koksofensohle vorgesehen sind, und vor den Öffnungen oder in den Leitungen (4,5) zu den Öffnungen Absperrvorrichtungen (7,8) angeordnet sind,
**dadurch gekennzeichnet, dass**
der Verkokungsofen
- mit mindestens einer Messvorrichtung (10,14) zur Konzentrationsmessung von Gasbestandteilen der Koksofenkammer, der Koksofensohle und/oder des Abgaskanals verbunden ist und
- diese Messvorrichtung ihrerseits mit einer Rechnereinheit (16) derart verbunden ist, dass diese Rechnereinheit Daten und Messergebnisse der Messvorrichtung empfangen kann, und
- die Rechnereinheit über Steuerleitungen (19,20) mit einer oder mehreren Stellvorrichtungen der Absperrvorrichtungen verbunden ist, wobei die Absperrvorrichtungen (7,8) Ventile, Klappen, Schieber oder dergleichen darstellen.

2. Verkokungsofen gemäß Anspruch 1,
**dadurch gekennzeichnet, dass**
in der Koksofensohle oder in dem Abgaskanal eine Temperaturmessvorrichtung (13) angeordnet ist, die ebenfalls mit der Rechnereinheit derart verbunden ist, dass diese Daten und Messergebnisse der Temperaturmessvorrichtung empfangen kann.

3. Verkokungsofen gemäß einem der Ansprüche 1 oder 2,
**dadurch gekennzeichnet, dass**
die Messvorrichtung (10) ein Analysegerät zur Bestimmung von Wasserstoff, Stickstoff, Kohlenmonoxid oder Kohlendioxid ist.

4. Verkokungsofen gemäß Anspruch 3,
**dadurch gekennzeichnet, dass**
das Analysegerät über eine Leitung (9) mit der Koksofenkammer verbunden ist.

5. Verkokungsofen gemäß einem der Ansprüche 1 oder 2,
**dadurch gekennzeichnet, dass**
die Messvorrichtung eine Lambdasonde (14) zur Bestimmung von Sauerstoff ist und in der Koksofensohle oder in dem Abgaskanal (6) angeordnet ist.

6. Verkokungsofen gemäß einem der Ansprüche 3 oder 5,
**dadurch gekennzeichnet, dass**
ein Analysegerät (10) zur Bestimmung von Wasserstoff, Stickstoff, Kohlenmonoxid oder Kohlendioxid und eine Lambdasonde (14) zur Bestimmung von Sauerstoff vorgesehen ist.

7. Verfahren zur Verkokung von Kohle,
**dadurch gekennzeichnet, dass**
ein Verkokungsofen nach einem der vorstehenden Ansprüche eingesetzt wird, wobei
- der Ofen mit Kohle gefüllt und der Verkokungsvorgang gestartet wird,
- während der Verkokung die Konzentration einer oder mehrere Gasbestandteile α-nalysiert werden,
- diese Daten an eine Rechnereinheit übermittelt werden,
- diese Rechnereinheit auf Basis gespeicherter diskreter Werte oder Modellrechnungen die Zufuhr der Primär- und/oder der Sekundärluft ermittelt, und
- über Steuerleitungen die Steuerelemente der Absperrvorrichtungen für Primärund/oder Sekundärluft ansteuert und somit
- die Primär- und/oder Sekundärluft regelt.

8. Verfahren zur Verkokung von Kohle gemäß Anspruch 7,
**dadurch gekennzeichnet, dass**
während der Verkokung
- die Temperatur in der Koksofensohle und/oder dem Abgaskanal ermittelt wird und
- diese Daten an eine Rechnereinheit übermittelt werden,
- diese Rechnereinheit auf Basis gespeicherter diskreter Werte oder Modellrechnungen die Zufuhr der Primär- und/oder der Sekundärluft ermittelt, und
- über Steuerleitungen die Steuerelemente der Absperrvorrichtungen für Primärund/oder Sekundärluft ansteuert und somit
- die Primär- und/oder Sekundärluft regelt.

9. Verfahren zur Verkokung von Kohle gemäß einem der Ansprüche 7 oder 8,
**dadurch gekennzeichnet, dass**
die mittlere Temperatur in der Koksofensohle im Laufe der Verkokung um 350°C bis 400°C fällt und 1000°C nicht unterschreitet.

10. Verfahren zur Verkokung von Kohle gemäß einem der Ansprüche 7 bis 9,
**dadurch gekennzeichnet, dass**
die Sauerstoffkonzentration im Abgaskanal konstant im Bereich von 7,5 bis 8,5 Volumenprozent liegt.

## Claims

1. A coke oven built in flat-type construction, a so-called non-recovery/heat-recovery coke oven, consisting of a coke oven chamber and a coke oven sole consisting of channels, with the coke oven chamber (1) and coke oven sole (2) being connected to each other via gas channels (3), and wherein one or several opening port(s) or channel(s) for supplying primary air and one or more opening port(s) or channel(s) for supplying secondary air into the coke oven sole are provided for in the oven wall and/or oven door, and wherein shutoff devices (7,8) are arranged in front of these opening ports or in the lines (4,5) conducing to these opening ports,
**characterised in that**
the coke oven
- is connected with at least one measuring device (10,14) to measure the concentration of gas constituents of the coke oven chamber, coke oven sole and/or waste gas channel, and
- this measuring device in turn is linked to a computer unit (16) in such a way that this computer unit can receive data and measured results from the measuring device, and
- this computer unit is connected via control lines (19,20) to one or more adjusting device(s) of said shutoff devices, with the shutoff devices (7,8) representing valves, flaps, slide gates or the like.

2. A coke oven according to claim 1,
**characterised in that**
a temperature measuring device (13) is arranged in the coke oven sole or in the waste gas channel, said temperature measuring device also being connected to the computer unit in such a way that it can receive data and measured results from the temperature measuring device.

3. A coke oven according to any of the preceding claims 1 or 2,
**characterised in that**
the measuring device (10) is an analyser for the determination of hydrogen, nitrogen, carbon monoxide or carbon dioxide.

4. A coke oven according to claim 3,
**characterised in that**
the analyser is linked via a line (4) to the coke oven chamber.

5. A coke oven according to any of the preceding claims 1 or 2,
**characterised in that**
the measuring device is a lambda probe (14) for the determination of oxygen and arranged in the coke oven sole or in the waste gas channel (6).

6. A coke oven according to any of the preceding claims 3 or 5,
**characterised in that**
an analyser (10) for the determination of hydrogen, nitrogen, carbon monoxide or carbon dioxide as well as a lambda probe (14) for the determination of oxygen are provided for.

7. A method for coal carbonisation,
**characterised in that**
a coke oven according to any of the preceding claims is implemented, with
- said oven being charged with coal and the cokemaking process being started,
- the concentration of one or more gas constituent(s) being analysed during carbonisation,
- this data being transmitted to a computer unit,
- this computer unit determining the supply of primary and/or secondary air on the basis of stored discrete values or model computations, and
- activating the control elements of said shutoff devices for primary and/or secondary air via control lines, thus
- regulating the primary and/or secondary air.

8. A method for coal carbonisation according to claim 7,
**characterised in that**
- the temperature in the coke oven sole and/or waste gas channel is determined, and
- this data are transmitted to a computer unit,
- this computer unit determines the supply of primary and/or secondary air on the basis of stored discrete values or model computations, and
- activates the control elements of the shutoff devices for primary and/or secondary air via control lines, thus
- regulating the primary and/or secondary air
during coal carbonisation.

9. A method for coal carbonisation according to any of the preceding claims 7 or 8,
**characterised in that**
the mean temperature in the coke oven sole during coal carbonisation falls by 350°C to 400°C and does not fall under 1000°C.

10. A method for coal carbonisation according to any of the preceding claims 7 to 9,
**characterised in that**
the concentration of oxygen in the waste gas channel constantly lies in the range of 7.5 to 8.5 percent by volume.

## Revendications

1. Four de cokéfaction de construction basse, dit four de cokéfaction avec/sans récupération de chaleur, comprenant une chambre de four à coke ainsi qu'une sole de four à coke composée de conduits, la chambre (1) et la sole (2) du four à coke étant reliées par des conduits de gaz (3), des orifices étant prévus dans la paroi et la porte du four pour l'alimentation en air primaire ainsi qu'un ou plusieurs orifice(s) ou conduit(s) dans la sole du four à coke pour l'alimentation en air secondaire, des dispositifs de blocage (7, 8) étant implantés devant les orifices ou dans les conduites (4, 5) menant aux orifices,
**Caractérisé en ce que**
Le four de cokéfaction
• Est relié à au moins un dispositif de mesure (10, 14) de concentration des composés gazeux de la chambre, de la sole du four à coke et/ou du conduit des gaz d'échappement et que
• Ce dispositif de mesure est lui-même relié à une unité de calcul (16) de sorte à ce que cette unité de calcul puisse recevoir les données et résultats de mesure provenant de l'unité de mesure et que
• L'unité de mesure est reliée à un ou plusieurs dispositif(s) de commande des dispositifs de blocage via des conduites de commande (19, 20), les dispositifs de blocage (7, 8) étant des vannes, clapets, tiroirs ou instruments similaires.

2. Four de cokéfaction selon la revendication 1,
**Caractérisé en ce que**
Un dispositif de prise de température (13) est placé dans la sole du four à coke ou dans le conduit des gaz d'échappement tout en étant lui-même relié à l'unité de calcul de sorte à ce que cette unité de calcul puisse recevoir les données et résultats de mesure provenant de l'unité de mesure.

3. Four de cokéfaction selon une des revendications 1 ou 2,
**Caractérisé en ce que**
Le dispositif de mesure (10) est un instrument d'analyse pour détecter l'hydrogène, l'azote, le monoxyde de carbone ou le dioxyde de carbone.

4. Four de cokéfaction selon la revendication 3,
**Caractérisé en ce que**
L'instrument d'analyse est relié à la chambre du four à coke par une conduite (9).

5. Four de cokéfaction selon une des revendications 1 ou 2,
**Caractérisé en ce que**
Le dispositif de mesure est une sonde lambda (14) de détection d'oxygène placée dans la sole du four à coke ou dans le conduit des fumées d'échappement (6).

6. Four de cokéfaction selon une des revendications 3 ou 5,
**Caractérisé en ce que**
Il est prévu un instrument d'analyse (10) pour détecter l'hydrogène, l'azote, le monoxyde de carbone ou le dioxyde de carbone ainsi qu'une sonde lambda (14) pour détecter l'oxygène.

7. Procédé de cokéfaction du coke
**Caractérisé en ce que**
Un four de cokéfaction est utilisé selon une des revendications ci-dessus,
• Le four étant rempli de charbon et la procédure de cokéfaction étant lancée,
• Pendant la cokéfaction, la concentration d'un ou plusieurs composés gazeux étant analysée,
• Ces données étant transmises à une unité de calcul,
• Cette unité de calcul définissant l'alimentation en air primaire et/ou secondaire sur la base de valeurs discrètes ou de calculs modèles mémorisés et
• Commandant les éléments de commande des dispositifs de blocage pour l'air primaire et/ou secondaire via des conduites de commande et
• Régulant ainsi l'air primaire et/ou secondaire.

8. Procédé de cokéfaction du coke selon la revendication 7,
**Caractérisé en ce que**
Pendant la cokéfaction,
• La température est définie dans la sole du four à coke et/ou dans le conduit des gaz d'échappement et que
• Ces données sont transmises à une unité de calcul,
• Cette unité de calcul définit l'alimentation en air primaire et/ou secondaire sur la base de valeurs discrètes ou de calculs modèles mémorisés et
• Commande les éléments de commande des dispositifs de blocage pour l'air primaire et/ou secondaire via des conduites de commande et
• Régule ainsi l'air primaire et/ou secondaire.

9. Procédé de cokéfaction du coke selon une des revendications 7 ou 8,
**Caractérisé en ce que**
La température moyenne dans la sole du four à coke descende de 350°C à 400°C pendant la cokéfaction et qu'elle ne soit pas inférieure à 1000°C.

10. Procédé de cokéfaction du coke selon une des revendications 7 à 9,
**Caractérisé en ce que**
La concentration en oxygène dans le conduit des gaz d'échappement est constante sur une plage de 7,5 à 8,5 de pourcentage volumique.
